Europäisches Patentamt

European Patent Office

Office européen des brevets

(19)

(11) Veröffentlichungsnummer: **0 472 872 A2**

# (12) EUROPÄISCHE PATENTANMELDUNG

(21) Anmeldenummer: **91111662.2**

(22) Anmeldetag: **12.07.91**

(51) Int. Cl.5: **G01B 11/06**, G01B 21/08

(30) Priorität: **31.08.90 DE 4027709**

(43) Veröffentlichungstag der Anmeldung:
**04.03.92 Patentblatt 92/10**

(84) Benannte Vertragsstaaten:
**CH DE DK FR GB IT LI**

(71) Anmelder: **Windmöller & Hölscher**
**Münsterstrasse 50**
**W-4540 Lengerich(DE)**

(72) Erfinder: **Sarcander, Uwe, Dipl.-Ing.**
**Auf der Rotenburg 31**
**W-4540 Lengerich(DE)**
Erfinder: **Helmer, Reinhard**
**Antruper-Strasse 25**
**W-4540 Lengerich(DE)**

(74) Vertreter: **Gossel, Hans K., Dipl.-Ing.**
**Lorenz-Seidler-Gossel et al**
**Widenmayerstrasse 23**
**W-8000 München 22(DE)**

(54) **Verfahren und Vorrichtung zur Ermittlung der Dicke der von einer Beschichtungsvorrichtung auf eine Bahn aufgebrachten Beschichtung.**

(57) Die Erfindung betrifft ein Verfahren zur Ermittlung der Dicke der von einer Beschichtungsvorrichtung auf eine Bahn, die zwischen einer Auftragswalze und einer Gegendruckwalze der Beschichtungsvorrichtung hindurchläuft, aufgebrachten, aus Leim oder einer anderen Beschichtungsmasse bestehenden Beschichtung. Zur Lösung der Aufgabe, ein Verfahren dieser Art zu schaffen, nach welchem sich die Dicke oder das Flächengewicht der auf die Trägerbahn aufgebrachten Beschichtung ständig schnell und genau ermitteln läßt, wird die Dicke des Films der aufzubringenden Beschichtungsmasse auf der Auftragswalze vor und hinter dem Berührungsbereich der Auftragswalze mit der zu beschichtenden Bahn gemessen und aus der Differenz der gemessenen Filmdicken die Dicke der von der Bahn abgenommenen Beschichtung bestimmt.

Die Erfindung betrifft ein Verfahren zur Ermittlung der Dicke der von einer Beschichtungsvorrichtung auf eine Bahn, die zwischen einer Auftragswalze und einer Gegendruckwalze der Beschichtungsvorrichtung hindurchläuft, aufgebrachten, aus Leim oder einer anderen Beschichtungsmasse bestehenden Beschichtung.

Bei der Beschichtung von Bahnen besteht das besondere Problem, die Dicke der aus der aufgebrachten Beschichtungsmasse bestehenden Schicht zu messen, um die Beschichtungsvorrichtung durch entsprechende Steuerung oder Regelung auf die gewünschte Schichtdicke einstellen zu können.

Zur Schichtdickenkontrolle ist es bekannt, an die beschichtete Bahn einen Schaber o.dgl. anzustellen und mit diesem die aufgebrachte Schicht zu ritzen oder abzukratzen, um auf diese Weise die Dicke der aufgebrachten Schicht zu kontrollieren. Eine derartige Sichtprobe ist aber sehr ungenau und daher unbefriedigend.

Weiterhin ist es bekannt, aus der beschichteten Bahn ein Probestück auszuschneiden und von diesem die aufgebrachte Beschichtung abzuziehen, so daß die Probe mit und ohne Beschichtung gewogen und aus den Wägungen das aufgebrachte Flächengewicht der Beschichtung ermittelt werden kann. Auch diese Art der Ermittlung der Schichtdicke oder des Flächengewichts der Beschichtung ist außerordentlich aufwendig und gestattet keine schnelle Regulierung der Schichtdicke während der Beschichtung der Bahn mit einer Beschichtungsmaschine.

Aufgabe der Erfindung ist es daher, ein Verfahren der eingangs angegebenen Art zu schaffen, nachdem sich die Dicke oder das Flächengewicht der auf die Trägerbahn aufgebrachten Beschichtung ständig schnell und genau ermitteln läßt.

Erfindungsgemäß wird diese Aufgabe bei einem Verfahren der gattungsgemäßen Art dadurch gelöst, daß die Dicke des Films der aufzubringenden Beschichtungsmasse auf der Auftragswalze vor und hinter dem Berührungsbereich der Auftragswalze mit der zu beschichtenden Bahn gemessen und aus der Differenz der gemessenen Filmedicken die Dicke der von der Bahn abgenommenen Beschichtung bestimmt wird. Die Filmdicken auf der Auftragswalze lassen sich auf einfache Weise mit bekannten Sensoren und zugehöriger Signalverarbeitungselektronik ermitteln, so daß nach dem erfindungsgemäßen Verfahren ständig die Ist-Dicke bzw. das Ist-Flächengewicht der Beschichtung gemessen und, falls erforderlich, die Beschichtungsmaschine auf den gewünschten Sollwert der Beschichtungsdicke eingestellt oder eingeregelt werden kann. Das erfindungsgemäße Verfahren läßt sich in besonders einfacher Weise durchführen, weil die Schichtdickenmessungen nicht mehr an der beschichteten Bahn selbst, sondern an der Auftragswalze vorgenommen werden.

Eine Vorrichtung zur Durchführung des erfindungsgemäßen Verfahrens zeichnet sich erfindungsgemäß dadurch aus, daß auf die Auftragswalze beidseits des Berührungsbereiches der von der Gegendruckwalze abgestützten Bahn Schichtdickenmeßköpfe gerichtet sind, die den gemessenen Schichtdicken entsprechende Signale erzeugen. Die Meßköpfe oder Sensoren können nach dem Ultraschall- oder Lichtreflexionsprinzip arbeiten. Zweckmäßigerweise besteht die Auftragswalze aus Stahl und ist mit einem Mantel aus einer Keramikbeschichtung versehen. Ein derartiger Mantel reflektiert zur Schichtdickenmessung verwendetes Licht besonders gut.

Vorzugsweise weisen die Meßköpfe je einen Strahler und einen Detektor auf, der die reflektierten Energieimpulse empfängt.

Als Sensoren können unter der Bezeichnung MICRO-QUAD 8000 von der Firma Moisture Systems Corp. in Hopkinton, Mass. USA, vertriebene nach dem Infrarot-Rückstreuprinzip arbeitende Meßsysteme verwendet werden, nach denen ein Lichtstrahl optisch aufgeteilt, gebündelt und auf das Objekt gelenkt wird. Mit optischen Infrarotfiltern wird eine Meß- und eine Referenzwellenlänge erzeugt, wobei nur der Meßimpuls absorbiert wird. Die vom Meßobjekt reflektierte Energie wird über einen Hohlspiegel auf einen Detektor gebracht und über elektronische Schaltungen wird ein von der Schichtdicke abhängiges elektrisches Signal erzeugt, das dann der weiteren Auswertung zugeführt wird.

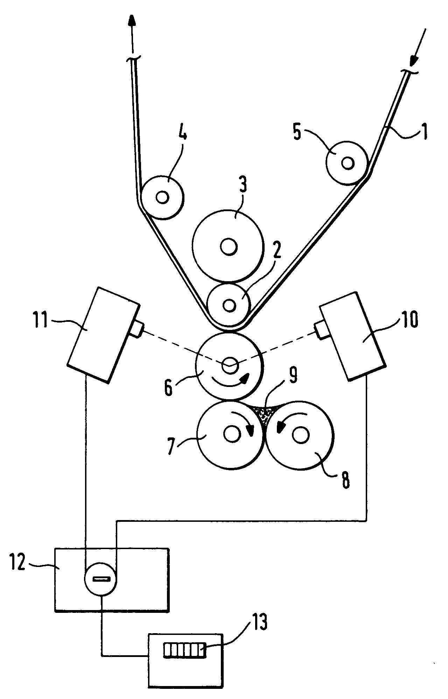

Ein Ausführungsbeispiel der Erfindung wird nachstehend anhand der Zeichnung, in deren einziger Figur eine Beschichtungsmaschine mit Schichtdickenmeßvorrichtung schematisch dargestellt ist, näher erläutert.

Die Beschichtungsmaschine besteht im wesentlichen aus einer Auftragswalze 6, an die eine Gegendruckwalze 2 angestellt ist, die teilweise von der zu beschichtenden Bahn 1 umschlungen ist. Die Gegendruckwalze ist durch einen Stützpresseur 3 abgestützt. Weiterhin sind in dem nicht dargestellten Maschinengestell Rollen 4, 5 gelagert, die der Führung der Bahn 1 dienen.

Auf die von der Gegendruckwalze 2 abgestützte Bahn 1 wird eine Beschichtungsmasse, beispielsweise Leim, von der Auftragswalze 6 aufgetragen.

Die Auftragswalze 6 erhält ihren Auftrag von Beschichtungsmasse von einer Dosierwalze 7, die mit einer Vordosierwalze 8 einen wannenförmigen Aufnahmespalt für die Beschichtungsmasse 9 bildet. Die Menge der von der Dosierwalze 7 auf die Auftragswalze 6 übertragenen Beschichtungsmasse läßt sich durch eine entsprechende Differenzgeschwindigkeit zwischen der Dosierwalze 7 und der Vordosierwalze 8 einstellen. Die Beschichtunsgmaschine ist bekannter Bauart und wird daher hier näher nicht beschrieben.

Die durch den Spalt zwischen der Auftragswalze 6 und der Gegendruckwalze 2 hindurchlaufende Bahn 1 nimmt von der Auftragswalze 6 die Beschichtungsmasse, beispielsweise Leim, zum größten Teil ab.

Vor und hinter dem Berührungsbereich der Auftragswalze mit der zu beschichtenden Bahn 1 sind senkrecht auf die Auftragswalze 6 die Meßköpfe 10, 11 einer Schichtdickenmeßeinrichtung gerichtet, so daß die Dicke des auf der Auftragswalze 6 befindlichen Films der Beschichtungsmasse vor und nach der Abnahme eines Teils dieser Beschichtungsmasse durch die Bahn 1 gemessen wird. Die Meßwerte werden einem elektronischen Differenzbildner 12 zugeführt, wobei das Ergebnis dieser Differenzbildung, das ein Maß für die Schichtdicke ist, an der Anzeige 13 abgelesen werden kann.

**Patentansprüche**

1. Verfahren zur Ermittlung der Dicke der von einer Beschichtungsvorrichtung auf eine Bahn, die zwischen einer Auftragswalze und einer Gegendruckwalze der Beschichtungsvorrichtung hindurchläuft, aufgebrachten, aus Leim oder einer anderen Beschichtungsmasse bestehenden Beschichtung,

   **dadurch gekennzeichnet**,

   daß die Dicke des Films der aufzubringenden Beschichtungsmasse auf der Auftragswalze vor und hinter dem Berührungsbereich der Auftragswalze mit der zu beschichtenden Bahn gemessen und aus der Differenz der gemessenen Filmdicken die Dicke der von der Bahn abgenommenen Beschichtung bestimmt wird.

2. Vorrichtung zur Durchführung des Verfahrens nach Anspruch 1, dadurch gekennzeichnet, daß auf die Auftragswalze (6) beidseits des Berührungsbereiches der von der Gegendruckwalze (2) abgestützten Bahn (1) Schichtdickenmeßköpfe (10,11) gerichtet sind, die den gemessenen Schichtdicken entsprechende Signale erzeugen.

3. Vorrichtung nach Anspruch 2, dadurch gekennzeichnet, daß die Meßköpfe nach dem Ultraschall- oder Lichtreflexionsprinzip arbeiten.

4. Vorrichtung nach Anspruch 2 oder 3, dadurch gekennzeichnet, daß die Auftragswalze aus Stahl besteht und mit einem Mantel aus einer Keramikbeschichtung versehen ist.

5. Vorrichtung nach einem der Ansprüche 2-4, dadurch gekennzeichnet, daß die Meßköpfe (10,11) je einen Strahler und einen Detektor aufweisen, der die reflektierten Energieimpulse empfängt.